# EUROPÄISCHE PATENTANMELDUNG

(11) **EP 1 884 464 A1**
(43) Veröffentlichungstag der Anmeldung: **06.02.2008**
(21) Anmeldenummer: 06015931.6
(22) Anmeldetag: 31.07.2006
(51) Int. Cl.: B64D 11/00

(54) **Anordnung zum Konfigurieren einer Sitzumgebung**

(71) Anmelder: Lufthansa Technik AG, 22335 Hamburg (DE)
(72) Erfinder: Muirhead, Andrew, 22848 Nordenstedt (DE)
(74) Vertreter: Glawe, Delfs, Moll

(57) **Zusammenfassung**

Anordnung zum Konfigurieren einer Sitzumgebung an Bord eines Transportmittels für Passagiere, insbesondere an Bord eines Flugzeugs (1) weist zumindest ein vom Passagier zu bedienendes Endgerät (10, 11, 13, 14, 15, 16, 17) in der Sitzumgebung auf. Das Endgerät (10, 11, 13, 14, 15, 16, 17) ist mit einem fest im Transportmittel installierten Bordrechner (7) verbunden. Die Anordnung zeichnet sich dadurch aus, dass sie ein vom Transportmittel (1) getrenntes Speichermedium (3, 4) für die Konfiguration definierende Daten und ein Datenübertragungsmittel (8, 20)) für eine Datenübertragung vom Speichermedium (3, 4) auf den Bordrechner (7) umfasst. Die Anordnung bietet dem Passagier die Möglichkeit, die Daten für die Konfiguration der Sitzumgebung vor der Reise einzugeben und die einmal eingegebenen Daten mehrfach zu verwenden.

## Beschreibung

Die Erfindung betrifft eine Anordnung zum Konfigurieren einer Sitzumgebung an Bord eines Transportmittels für Passagiere, insbesondere an Bord eines Flugzeugs. Die Sitzumgebung weist zumindest ein vom Passagier zu bedienendes Endgerät auf. Das Endgerät ist fest mit einem im Transportmittel installierten Bordrechner verbunden.

Es ist üblich, dass Passagieren an Bord eines Flugzeugs eine Vielzahl von Möglichkeiten geboten wird, die Sitzumgebung nach persönlichen Vorlieben zu konfigurieren. Nachteilig bei der Vielzahl von Einstellmöglichkeiten ist es, dass der Passagier, nachdem er seinen Sitz eingenommen hat, einige Zeit aufwenden muss, um jede einzelne Einstellmöglichkeit zu bedienen und die jeweils für ihn optimale Einstellung zu finden.

Der Erfindung liegt die Aufgabe zugrunde, dem Passagier das Konfigurieren der Sitzumgebung zu erleichtern.

Die Aufgabe wird gelöst durch die Merkmale des Anspruchs 1. Vorteilhafte Ausführungsformen finden sich in den Unteransprüchen.

Zunächst werden einige Begriffe definiert.

Als Konfiguration wird der Vorgang bezeichnet, aus einer Vielzahl von möglichen Einstellungen bestimmte Einstellungen auszuwählen. Der Bereich möglicher Einstellungen kann fest vorgegeben sein, wie beispielsweise der Verstellbereich einer Sitzlehne. Bestimmte Einstellmöglichkeiten können aber auch erst im Rahmen der Konfiguration geschaffen werden, etwa indem Musikstücke auf dem Bordrechner gespeichert werden.

Die Sitzumgebung umfasst alle Einrichtungen, die einem einzelnen Sitz zugeordnet sind. Nicht umfasst sind also solche Einrichtungen, mit denen mehrere Sitze gleichzeitig bedient werden. Die Sitzumgebung ist räumlich nicht auf den Bereich beschränkt, den der Passagier von seinem Sitz aus körperlich erreichen kann. So können etwa ein dem Sitz zugeordnetes Fenster oder eine dem Sitz zugeordnete Anzeigeeinheit in einigem Abstand zum Sitz angeordnet sein.

Außer in Flugzeugen kann die Sitzumgebung auch in beliebigen anderen Transportmitteln angeordnet sein. Besonders geeignet ist die Erfindung für solche Transportmittel, in denen der Passagier während der Reise einen bestimmten Sitz einnimmt, wie beispielsweise Eisenbahn oder Auto.

Der Bordrechner kann ein Zentralrechner des Transportmittels sein. Er kann aber auch ein dem Sitz zugeordneter Rechner sein, der entweder separat arbeitet oder seinerseits mit einem Zentralrechner verbunden ist. Die Verbindung zwischen Bordrechner und Endgeräten kann auch drahtlos sein.

Erfindungsgemäß umfasst die Anordnung ein vom Transportmittel getrenntes Speichermedium für die Daten, die die Konfiguration der Sitzumgebung definieren. Weiterhin umfasst sie ein Datenübertragungsmittel für eine Datenübertragung vom Speichermedium auf den Bordrechner. Der Passagier hat dadurch die Möglichkeit, seine bevorzugte Konfiguration fern vom Transportmittel einzustellen und auf dem Speichermedium zu speichern, um sie später auf den Bordrechner zu übertragen. Es wird dem Passagier erspart, seine Zeit an Bord des Transportmittels für das Konfigurieren der Sitzumgebung aufzuwenden. Die Erfindung eröffnet ferner die Möglichkeit die Konfiguration bei mehreren verschiedenen Sitzen zu verwenden.

Das Speichermedium kann ein dem Betreiber des Transportmittels zugeordneter Zentralrechner sein. Dadurch können die Daten für die Sitzumgebungen verschiedener Passagiere zentral gesammelt werden, um sie zusammen auf den Bordrechner zu übertragen. Es ist nicht erforderlich, dass der Betreiber des Transportmittels auch den Zentralrechner selbst betreibt. Für die Zuordnung reicht es aus, dass der Betreiber des Transportmittels auf die zentral gespeicherten Daten zugreifen kann, um diese auf den Bordrechner des Transportmittels zu übertragen. Der Zentralrechner ist vorzugsweise am Flughafen installiert.

Der Zentralrechner ist zweckmäßigerweise mit dem Internet verbunden und für einen durch den Passagier gesteuerten Datenempfang ausgelegt. Die Übertragung per Internet bietet dem Passagier Freiheit bei der Entscheidung, wann und von wo er seine Daten eingibt. Der Zentralrechner kann auch mit einem öffentlich zugänglichen Eingabeterminal verbunden sein. Wenn das Eingabeterminal am Flughafen aufgestellt ist, kann der Passagier die Wartezeit vor dem Abflug für die Eingabe der Daten nutzen.

Das Speichermedium kann eine vom Passagier mitgeführte mobile Speichereinheit sein. Dadurch kann der Passagier seine einmal eingegebenen Daten verwenden, ohne auf ein Speichermedium des Betreibers des Transportmittels angewiesen zu sein. Erfindungsgemäß kann die Anordnung sowohl Zentralrechner als auch mobile Speichereinheiten umfassen.

Die mobile Speichereinheit kann ein USB-Speicher sein. In Frage kommen aber auch beliebige andere Standardspeichermittel, wie etwa Speicherkarten. Die Verwendung bekannter und standardisierter Speichermittel erleichtert dem Passagier die Verwendung.

Insbesondere wenn das Speichermedium ein Zentralrechner ist, ist es zweckmäßig, das Datenübertragungsmittel als Funkverbindung zu gestalten. Dies erleichtert die Datenübertragung, da auf eine Kabelverbindung zwischen Transportmittel und Speichermedium verzichtet werden kann. Die Funkverbindung kann insbesondere eine Gatelink-Verbindung sein. Dies ist die bekannte und an Flughäfen vorhandene Kommunikationseinrichtung für die Kommunikation des Flugzeugs mit Flughafeneinrichtungen.

Das Datenübertragungsmittel kann auch ein in der Sitzumgebung angeordneter Anschluss für die mobile Speichereinheit sein. Mit diesem Anschluss kann der Passagier seinen mobilen Speicher nach dem Einnehmen des Sitzes verbinden und die Daten übertragen. Der Passagier behält die Kontrolle über die Datenübertragung.

Das Datenübertragungsmittel kann weiterhin für eine Datenübertragung vom Bordrechner auf das Speichermedium ausgelegt sein. Auf diese Weise können Einstellungen, die der Passagier an Bord vorgenommen oder verändert hat auf das Speichermedium übertragen werden, um sie in einer anderen Sitzumgebung erneut zu verwenden. Es besteht außerdem die Möglichkeit, dass zuvor vom Zentralrechner auf den Bordrechner übertragene Daten auf die mobile Speichereinheit des Passagiers übertragen werden. Dadurch wird der Passagier unabhängig vom Zentralrechner.

Die auf dem Speichermedium gespeicherten Daten können persönliche Daten des Passagiers umfassen. Um zu verhindern, dass Dritte von der Sitzumgebung aus auf die persönlichen Daten zugreifen können, kann die Anordnung eine Sperreinrichtung gegen unbefugten Zugriff auf die Daten umfassen.

Die Sperreinrichtung kann so ausgelegt sein, dass sie durch das Bordpersonal bedient wird. Nachdem der Passagier sich identifiziert hat, gibt das Bordpersonal die Daten frei. Möglich ist es aber auch, dass die Sperreinrichtung für eine Bedienung durch den Passagier ausgelegt ist. Damit kann der Passagier selbst über seine Daten bestimmen. Der Passagier kann die Sperreinrichtung beispielsweise durch einen einzugebenden Code oder durch ein die Identifizierung ermöglichendes technisches Mittel wie eine Magnetkarte aufheben.

Damit der Passagier sich auf die von ihm bevorzugte Art unterhalten lassen kann, kann das Endgerät ein Musik-und/oder Videoabspielgerät umfassen. Die vom Speichermedium übertragenen Daten können Listen von Musikstücken und/oder Videofilmen für einen Zugriff auf das an Bord vorhandene Angebot umfassen. Ebenfalls möglich ist es, dass noch nicht an Bord vorhandene Musikstücke oder Videofilme vom Speichermedium auf den Bordrechner übertragen werden.

Vielfältige Möglichkeiten bieten sich dem Passagier, wenn das Endgerät mit dem Internet verbunden ist. Besonders komfortabel ist der Internetzugriff für den Passagier, wenn die vom Speichermedium übertragenen Daten Listen von seinen bevorzugten Internetangeboten und/oder Zugangsdaten für zugangsbeschränkte Angebote wie einen Email-Account umfassen.

Um den Passagier mit Informationen über die Reise, etwa Reisegeschwindigkeit oder erwartete Ankunftszeit, zu versorgen, kann das Endgerät für die Anzeige von an Bord verfügbaren Informationen ausgelegt sein. Mit Hilfe seiner übertragenden Daten kann die Anzeige nach den Wünschen des Passagiers konfiguriert werden. Er kann auswählen, welche Informationen angezeigt werden sollen und welches Format für die Darstellung verwendet werden soll. Ausgewählt werden kann beispielsweise zwischen der Darstellung in metrischen Einheiten und der Darstellung in anderen Größeneinheiten. Die erfindungsgemäße Anordnung kann auch dazu verwendet werden, Einreiseformulare oder dergleichen auszufüllen. Beispielsweise kann dem Passagier am Bildschirm ein bereits mit den dem System bekannten Daten vorausgefülltes Formular angeboten werden, dass der Passagier ändern oder ergänzen kann. Anschließend kann ein Ausdruck erfolgen.

Möglich ist es auch, dem Passagier auf dem Endgerät Informationen für seine Weiterreise anzuzeigen. Diese Informationen können die Abflugzeit oder das Gate seines Anschlussfluges umfassen. Zu diesem Zwecke ist es vorteilhaft wenn die vom Speichermedium übertragenen Daten Reisedaten des Passagiers enthalten.

Wesentliche Vorraussetzung für das Wohlbefinden des Passagiers an Bord ist es, dass die Sitzposition nach seinen Vorstellungen eingestellt ist. Die Sitzposition wird bestimmt durch die üblichen Einstellmöglichkeiten, wie Neigung der Lehne, Höhe der Sitzfläche, Position der Kopf- und Fußstützen. Das Endgerät ist in diesem Fall der Sitz selbst.

Ebenfalls von Bedeutung für das Wohlbefinden des Passagiers ist die Klimatisierung. Um eine Einstellung von beispielsweise Temperatur, Stärke und Richtung des Luftstroms zu ermöglichen, kann das Endgerät eine Klimatisierungseinrichtung sein.

Das Endgerät kann ferner eine Fensterblende und/oder eine Beleuchtungseinrichtung sein. Der Passagier kann wählen, welchem Lichteinfall er sich aussetzt.

Möglich ist es auch, dass das Endgerät für eine Übermittlung von Informationen an das Bordpersonal ausgelegt ist. Auf diese Weise kann übermittelt werden, welche Wünsche der Passagier an den Service durch das Bordpersonal hat. Er kann beispielsweise bestimmen, zu welchen Uhrzeiten er seine Mahlzeiten einnehmen möchte und geweckt werden möchte, welche Art von Mahlzeit er wünscht, ob er Zollfrei einkaufen möchte oder ob er weitere Serviceleistungen wie beispielsweise Massage in Anspruch nehmen möchte.

Ein einzelnes Endgerät kann mehrere der genannten Einstellmöglichkeiten bieten. Ebenfalls möglich ist es aber, dass die Anordnung eine Mehrzahl von Endgeräten umfasst.

Die Erfindung wird im folgenden anhand einer vorteilhaften Ausführungsform unter Bezugnahme auf die beigefügten Zeichnungen beispielhaft beschrieben. Es zeigen:
- Fig. 1: eine schematische Darstellung einer Sitzumgebung einer erfindungsgemäßen Anordnung; und
- Fig. 2: eine schematische Darstellung einer erfindungsgemäßen Anordnung.

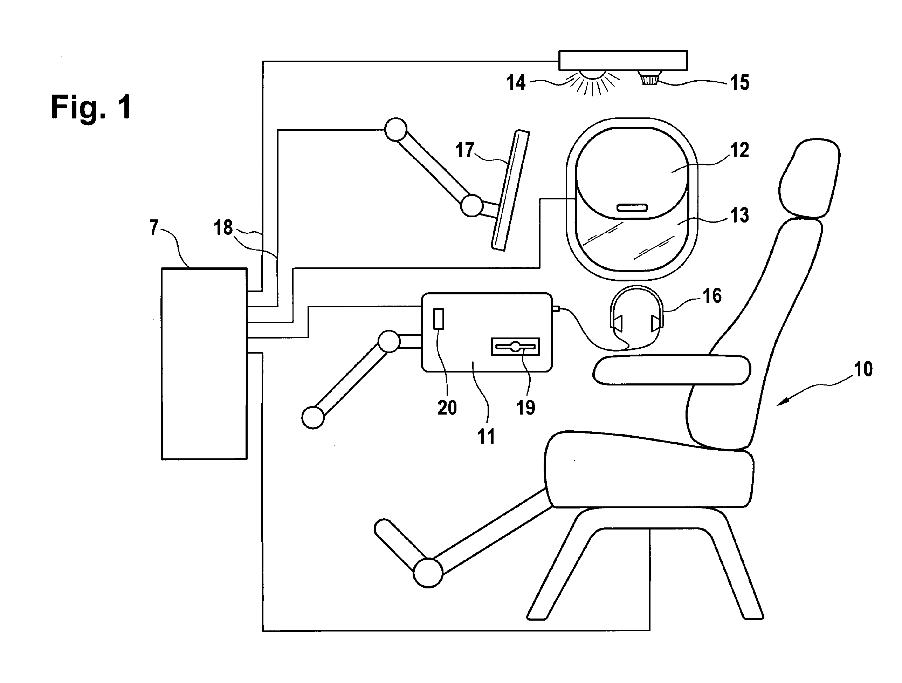

An Bord eines Flugzeugs nimmt der Passagier Platz auf einem in Figur 1 dargestellten Sitz 10. Vor sich hat der Passagier eine mit einem Bordrechner 7 verbundene Bedieneinheit 11. Über den Bordrechner 7 und Kabel 18 sind eine Vielzahl weiterer Endgeräte in der Umgebung des Sitzes 10 mit der Bedieneinheit 11 verbunden. Diese Endgeräte kann der Passagier mit Hilfe der Bedieneinheit 11 nach seinen Vorstellungen konfigurieren.

Zunächst kann er für eine bequeme Sitzposition die Stellung von Rückenlehne, Armlehne, Kopfstütze, Sitzfläche und Fußstütze des Sitzes 10 einstellen. Weiterhin kann er die Position einer Fensterblende 12 an einem Fenster 13 bestimmen. Eine Beleuchtungseinheit 14 in der Umgebung des Sitzes 10 kann auf die gewünschte Helligkeit, eine Austrittsdüse 15 einer Klimaanlage auf die gewünschten Parameter der Luftströmung eingestellt werden.

Über einen Kopfhörer 16 kann der Passagier seine bevorzugte Musik hören oder über einen Monitor 17 und den Kopfhörer 16 einen gewünschten Videofilm anschauen. Nicht zuletzt ist es möglich, über die Bedieneinheit 11 und den Monitor 17 auf das Internet zuzugreifen, beispielsweise um dort Emails abzurufen.

Über den Monitor 17 können Informationen über den Flug an den Passagier übermittelt werden. Der Passagier kann auswählen, welche Informationen er erhalten möchte und in welchem Format ihm diese angezeigt werden. Über den Monitor 17 kann der Passagier sich ferner Informationen über seine Weiterreise, etwa das Gate und die Abflugzeit seines Anschlussfluges anzeigen lassen.

Über die Bedieneinheit 11 besteht für den Passagier die Möglichkeit, Informationen an das Bordpersonal zu übermitteln. Der Passagier kann angeben, wann er geweckt werden möchte, wann er essen möchte, was er essen möchte und welche sonstigen Serviceangebote er wahrnehmen möchte.

Alle beschriebenen Einstellungen der in der Sitzumgebung angeordneten Endgeräte können über die Bedieneinheit 11, vorgenommen werden. Erfindungsgemäß wird dem Passagier zusätzlich dazu die Möglichkeit geboten, die die Konfiguration der Endgeräte definierenden Daten bereits vor Reisebeginn zu speichern und auf den Bordrechner 7 zu übertragen.

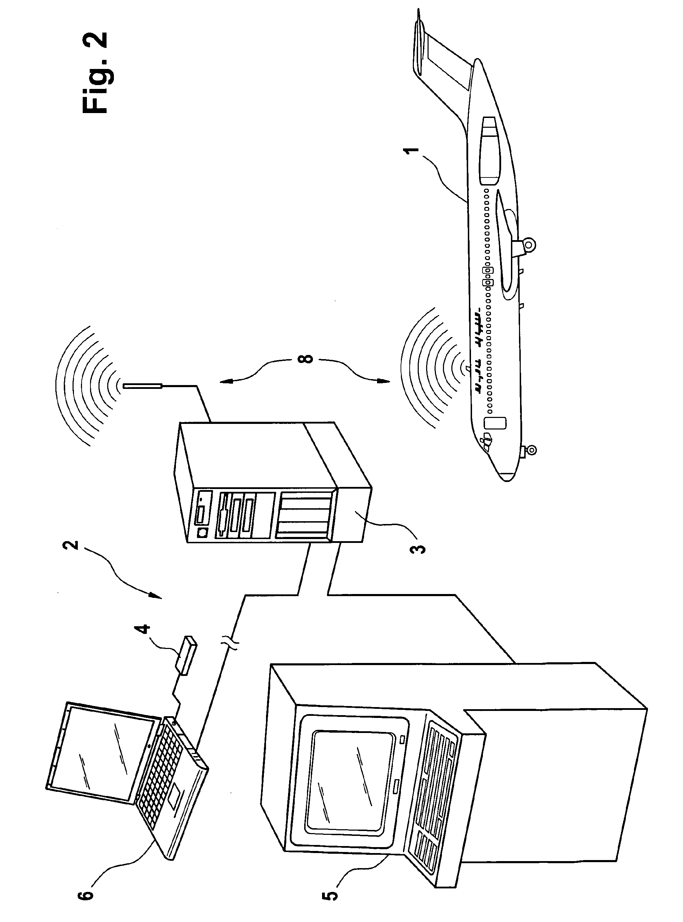

Die Bestandteile der erfindungsgemäßen Anordnung zeigt Fig. 2. Ein auf einem Flughafen befindliches Flugzeug 1 hat in seinem Inneren die beschriebene Sitzumgebung. Getrennt vom Flugzeug 1 sind Einrichtungen 2 für die Speicherung und Übertragung der Daten angeordnet.

Ein am Flughafen angeordneter Zentralrechner 3 der Fluggesellschaft nimmt vor Reisebeginn die Konfigurationsdaten der Passagiere auf. Dazu ist der Zentralrechner 3 mit einem ebenfalls auf dem Flugghafen angeordneten Eingabeterminal 5 verbunden. Wahlweise haben die Passagiere auch die Möglichkeit die Daten mit einem persönlichen Rechner 6 über das Internet auf den Zentralrechner 3 zu übermitteln. Unmittelbar bevor die Passagiere das Flugzeug 1 betreten, werden die Daten über eine als Gatelink-Verbindung eingerichtete Funkverbindung 8 auf den Bordrechner 7 übertragen.

Anstatt auf dem Zentralrechner 3 kann der Passagier seine Konfigurationsdaten auch auf einer mobilen Speichereinheit wie beispielsweise einem USB-Speicher 4 speichern. Wenn der Passagier seinen Sitz 10 an Bord des Flugzeugs 1 eingenommen hat, überträgt er seinen Daten über einen USB-Anschluss 20 auf den Bordrechner 7.

Bevor die auf den Bordrechner 7 übertragenen Daten vom Sitz 10 aus zugänglich sind, müssen die Daten freigegeben werden, es muss also eine Sperreinrichtung aufgehoben werden. Dazu wird entweder eine Identifikationskarte in einen Kartenleser 19 der Bedieneinheit 11 eingesteckt oder es wird über eine Tastatur der Bedieneinheit 11 ein Zugangscode eingegeben. Alternativ ist es möglich, dass das Bordpersonal die Sperreinheit aufhebt, sobald der Passagier sich identifiziert hat.

Nach der Aufhebung der Sperreinrichtung nehmen alle Endgeräte in der Sitzumgebung die durch die Daten definierte Konfiguration ein.

Während der Reise kann der Passagier über die Bedieneinheit 11 die Einstellungen der Endgeräte verändern. Falls gewünscht kann er die geänderten oder neu vorgenommenen Einstellungen über den USB-Anschluss 20 auf den USB-Speicher 4 übertragen, um sie bei der nächsten Reise in einer anderen Sitzumgebung wieder zur Verfügung zu haben.

## Patentansprüche

1. Anordnung zum Konfigurieren einer Sitzumgebung an Bord eines Transportmittels für Passagiere (1), insbesondere an Bord eines Flugzeugs, bei der die Sitzumgebung zumindest ein vom Passagier zu bedienendes Endgerät (10, 11, 13, 14, 15, 16, 17) aufweist und wobei das Endgerät (10, 11, 13, 14, 15, 16, 17) mit einem fest im Transportmittel (1) installierten Bordrechner (7) verbunden ist, **dadurch gekennzeichnet, dass** sie ein vom Transportmittel (1) getrenntes Speichermedium (3, 4) für die Konfiguration definierende Daten und ein Datenübertragungsmittel (8, 20) für eine Datenübertragung vom Speichermedium (3, 4) auf den Bordrechner (7) umfasst.

2. Anordnung nach Anspruch 1, **dadurch gekennzeichnet, dass** das Speichermedium ein dem Betreiber des Transportmittels zugeordneter Zentralrechner (3) ist.

3. Anordnung nach Anspruch 2, **dadurch gekennzeichnet, dass** der Zentralrechner (3) für einen durch den Passagier gesteuerten Datenempfang über das Internet ausgelegt ist.

4. Anordnung nach Anspruch 2 oder 3, **dadurch gekennzeichnet, dass** der Zentralrechner (3) mit einem öffentlich zugänglichen Eingabeterminal (5) verbunden ist.

5. Anordnung nach Anspruch 1, **dadurch gekennzeichnet, dass** das Speichermedium eine vom Passagier mitgeführte mobile Speichereinheit (4) ist.

6. Anordnung nach Anspruch 5, **dadurch gekennzeichnet, dass** die mobile Speichereinheit ein USB-Speicher (4) ist.

7. Anordnung nach einem der Ansprüche 1 bis 6, **dadurch gekennzeichnet, dass** das Datenübertragungsmittel eine Funkverbindung (8) ist.

8. Anordnung nach Anspruch 7, **dadurch gekennzeichnet, dass** die Funkverbindung (8) eine Gatelink-Verbindung ist.

9. Anordnung nach Anspruch 5 oder 6, **dadurch gekennzeichnet, dass** das Datenübertragungsmittel ein in der Sitzumgebung angeordneter Anschluss für die mobile Speichereinheit (20) ist.

10. Anordnung nach einem der Ansprüche 1 bis 9, **dadurch gekennzeichnet, dass** das Datenübertragungsmittel (20) für eine Datenübertragung vom Bordrechner (7) auf das Speichermedium (4) ausgelegt ist.

11. Anordnung nach einem der Ansprüche 1 bis 10, **dadurch gekennzeichnet, dass** sie eine Sperreinrichtung gegen unbefugten Zugriff auf die die Konfiguration definierenden Daten von der Sitzumgebung aus umfasst.

12. Anordnung nach Anspruch 11, **dadurch gekennzeichnet, dass** die Sperreinrichtung für eine Bedienung durch Bordpersonal ausgelegt ist.

13. Anordnung nach Anspruch 11, **dadurch gekennzeichnet, dass** die Sperreinrichtung (19) für eine Bedienung durch den Passagier ausgelegt ist.

14. Anordnung nach einem der Ansprüche 1 bis 13, **dadurch gekennzeichnet, dass** das Endgerät (11) ein Musik-und/oder Videoabspielgerät umfasst.

15. Anordnung nach einem der Ansprüche 1 bis 14, **dadurch gekennzeichnet, dass** das Endgerät (11) mit dem Internet verbunden ist.

16. Anordnung nach einem der Ansprüche 1 bis 15, **dadurch gekennzeichnet, dass** die vom Speichermedium (3, 4) übertragenen Daten Listen von Musikstücken, Videofilmen und/oder Internetangeboten umfassen.

17. Anordnung nach einem der Ansprüche 1 bis 16, **dadurch gekennzeichnet, dass** die vom Speichermedium (3, 4) übertragenen Daten Musikstücke oder Videofilme umfassen.

18. Anordnung nach einem der Ansprüche 1 bis 17, **dadurch gekennzeichnet, dass** die vom Speichermedium (3, 4) übertragenen Daten Zugangsdaten für zugangsbeschränkte Angebote umfassen.

19. Anordnung nach einem der Ansprüche 1 bis 18, **dadurch gekennzeichnet, dass** das Endgerät (17) für die Anzeige von an Bord verfügbaren Informationen ausgelegt ist.

20. Anordnung nach einem der Ansprüche 1 bis 19, **dadurch gekennzeichnet, dass** die vom Speichermedium (3, 4) übertragenen Daten Reisedaten des Passagiers umfassen.

21. Anordnung nach einem der Ansprüche 1 bis 20, **dadurch gekennzeichnet, dass** das Endgerät der Sitz (10) ist.

22. Anordnung nach einem der Ansprüche 1 bis 21, **dadurch gekennzeichnet, dass** das Endgerät eine Klimatisierungseinrichtung (15) ist.

23. Anordnung nach einem der Ansprüche 1 bis 22, **dadurch gekennzeichnet, dass** das Endgerät eine Fensterblende (12) ausgelegt ist.

24. Anordnung nach einem der Ansprüche 1 bis 23, **dadurch gekennzeichnet, dass** das Endgerät eine Beleuchtungseinrichtung (14) ist.

25. Anordnung nach einem der Ansprüche 1 bis 24, **dadurch gekennzeichnet, dass** das Endgerät (11) für eine Datenübertragung zum Bordpersonal ausgelegt ist.

26. Anordnung nach einem der Ansprüche 1 bis 25, **dadurch gekennzeichnet, dass** sie eine Mehrzahl von Endgeräten (10, 11, 13, 14, 15, 16, 17) umfasst.
